(19) Europäisches Patentamt
European Patent Office
Office européen des brevets

(11) **EP 2 752 793 A1**

(12) **EUROPEAN PATENT APPLICATION**
published in accordance with Art. 153(4) EPC

(43) Date of publication:
**09.07.2014 Bulletin 2014/28**

(21) Application number: **11871439.3**

(22) Date of filing: **30.08.2011**

(51) Int Cl.:
***G06Q 10/00*** *(2012.01)*

(86) International application number:
**PCT/JP2011/069534**

(87) International publication number:
**WO 2013/030942 (07.03.2013 Gazette 2013/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventor: **YOSHIZU, Sayaka**
**Toyota-shi**
**Aichi 471-8571 (JP)**

(74) Representative: **Winter, Brandl, Fürniss, Hübner, Röss, Kaiser, Polte - Partnerschaft**
**Patent- und Rechtsanwaltskanzlei**
**Bavariaring 10**
**80336 München (DE)**

(54) **BEHAVIOR HISTORY MANAGEMENT SYSTEM, AND BEHAVIOR HISTORY MANAGEMENT METHOD**

(57) Movement histories of a vehicle (C) are registered appropriately in a database (200). A point specification unit (120) specifies a geographical base of a user as a point serving as a nucleus of behavior of the user. When the need arises to delete a movement history stored in the database (200), a deletion subject data determination unit (320) specifies a movement history having a low degree of relatedness to the geographical base of the user. A data deletion unit (330) then deletes the movement history specified by the deletion subject data determination unit (320) from the database (200). As a result, behavior histories having a high utility value to the user are held preferentially in the database (200).

FIG.1

EP 2 752 793 A1

**Description**

TECHNICAL FIELD

The invention relates to a behavior history management system and a behavior history management method with which behavior histories of a user are managed using a database.

BACKGROUND ART

Recent information terminals such as personal computers provide a service to a user in which behavior histories of a user, including histories of searches performed using an internetwork and so on, are stored in a database, and recommendation information, which is information offering the user recommendations, is provided to the user on the basis of the stored behavior histories. Although the number of behavior histories gradually increases as the user continues to the use the information terminal, there is a limit to an amount of data that can be stored in the database storing the behavior histories. On this type of information terminal, therefore, the behavior histories stored in the database are typically managed by deleting the behavior histories successively from the oldest behavior histories onward to ensure that the amount of data does not exceed a storable capacity.

Further, Patent Document 1, for example, describes a system of storing a behavior history generated when a user moves to a specific location, and managing the stored behavior histories. Furthermore, in the system described in Patent Document 1, the behavior histories stored in the database are limited to extraordinary behavior that diverges from average behavior. As a result, only extraordinary behavior histories constituting a part of all of the behavior histories are stored in the database, leading to a reduction in the amount of data stored in the database.

Patent Document 1: Japanese Patent Application Publication No. 2011-028436

SUMMARY OF THE INVENTION

Incidentally, even if the behavior histories stored in the database are limited as in the system described in Patent Document 1, when the amount of behavior history data stored in this limited fashion reaches the storable capacity of the database, the behavior histories are again limited in accordance with the capacity of the database. Likewise in this case, the data relating to the behavior histories stored in the database are normally deleted successively from the oldest data onward.

However, the data of an old behavior history may have a greater utility value to the user than the data of a new behavior history. In other words, even when the behavior histories stored in the database are deleted successively from an oldest storage date onward so that newly obtained behavior histories remain in the database, this does not necessarily mean that the data of the behavior histories having a high utility value to the user remain stored. Furthermore, services provided on the basis of the behavior histories managed in the database are not necessarily services corresponding to the wishes of the user.

The invention has been designed in consideration of these circumstances, and an object thereof is to provide a behavior history management system and a behavior history management method with which, when behaviors of a user are stored in a database as data, a behavior history having a high utility value to a user can be held preferentially.

Means for solving the problem described above, as well as actions and effects thereof, will be described below.

To achieve the object described above, a behavior history management system according to the invention is a system that stores behavior histories of a user in a database and manages the behavior histories, including: a point specification unit that specifies a point serving as a nucleus of behavior of the user; and a data management unit that specifies a behavior history having a low degree of relatedness to the point specified by the point specification unit, and when data are to be deleted from the database, deletes the specified behavior history preferentially.

To achieve the object described above, a behavior history management method according to the invention is a method for managing behavior histories of a user while storing the behavior histories in a database, including: a step of specifying a point serving as a nucleus of behavior of the user; and a step of specifying a behavior history having a low degree of relatedness to the specified point, and when data are to be deleted from the database, deleting the specified behavior history preferentially.

A point serving as a nucleus of the various behaviors performed by the user typically exists. The user tends to perform the various behaviors using the point serving as the nucleus as a base. Further, the behavior histories of the user include behavior histories that are used continuously and therefore have a high utility value to the user, and conversely, behavior histories that are unlikely to be used in the future and therefore have a low utility value. A behavior history having a high utility value to the user is more closely connected to the point serving as the base of the behavior, and therefore has a high degree of relatedness to the point. A behavior history having a low utility value to the user, on the other hand, is less closely connected to the point serving as the base of the behavior, and therefore has a low degree of relatedness to the point. Furthermore, the behavior histories may be presented to the user or the like and used as indices during a subsequent behavior of the user, for example. A behavior history having a high degree of relatedness to the point serving as the nucleus of the behavior of the user is more likely to match the subsequent behavior of the user, and therefore has a high utility value. Hence, the need to keep a behavior history stored in the database increases as the degree of relatedness of the behavior history to the point serving as the nucleus of the behavior of the user increases.

Therefore, in accordance with the configuration or the method described above, the point serving as the nucleus of the behavior of the user is specified, whereupon a behavior history having a low degree of relatedness to the specified point is specified. Then, when an amount of behavior history data stored in the database reaches a storable upper limit value of the database or the amount of behavior history data stored in the database reaches a predetermined data amount, for example, the movement history having a low degree of relatedness to the point specified as the nucleus of the behavior of the user, from among the behavior histories stored in the database, is deleted preferentially. Hence, movement histories having a high degree of relatedness to the point specified as the nucleus of the behavior of the user are held in the database with stability, and as a result, movement histories having a high utility value to the user can be held in the database on a long-term basis while storing the behavior histories of the user appropriately.

In an aspect of the invention, the point serving as the nucleus of the behavior of the user is specified in relation to at least one category based on the behavior histories of the user, and the point specification unit specifies the point serving as the nucleus of the behavior of the user for each category, and the database stores the behavior histories for each category.

In an aspect of the invention, in the point specifying step, the point serving as the nucleus of the behavior of the user is specified in relation to at least one category based on the behavior histories of the user, and the behavior histories are stored in the database in for each specified category.

The user performs various behaviors, and points serving as nuclei of the various behaviors differ according to category. For example, during a search behavior performed on an internetwork using an information terminal, a predetermined search site or a predetermined site serves as the nucleus of the behavior of the user, and various searches are performed using the nucleus site as a base. Accordingly, sites visited many times from the nucleus site and sites viewed for a long time, for example, have a high degree of relatedness to the nucleus site and are therefore highly likely to be used by the user. Behavior histories (viewing histories) of the user, which are related to sites reflecting the existence and content of the sites that are highly likely to be used, also have a high utility value to the user.

Furthermore, when the behavior of the user is a geographical movement, a home of the user, for example, constitutes the point serving as the nucleus of the behavior of the user. In this case, movement histories generated when the user moves using his/her home as a base are stored in the database as the behavior histories of the user.

Hence, various categories of user behavior exist, and therefore the point serving as the nucleus of the behavior of the user and the behavior histories having a high degree of relatedness to the point also differ according to category. Therefore, according to the configuration or the method described above, the point serving as the nucleus of the behavior of the user is specified in relation to at least one category based on the behavior histories of the user, and the behavior histories of the user are stored in the database for each specified category. Thus, even when the point serving as the nucleus of the behavior of the user is different in each category, the point serving as the nucleus of the behavior of the user is specified in relation to each category, whereupon the behavior histories having a high degree of relatedness to the specified points are held in the database preferentially. As a result, even when behavior histories belonging to a plurality of categories are stored in the database, the various behavior histories having a high utility value can be held in the database with stability.

Moreover, according to the configuration or the method described above, various types of user behaviors can be stored in the database, and the various behavior histories of the user can be managed according to category. As a result, accurate services corresponding to the behavior of the user can be provided using the various behavior histories stored in the database according to category.

In an aspect of the invention, the behavior histories are histories representing behaviors of the user, which are generated every time the user travels to a destination, and the data management unit specifies a behavior history generated on a journey to a destination having a low degree of relatedness to the specified point as a behavior history to be deleted from the database.

In an aspect of the invention, the behavior histories are histories representing behaviors of the user, which are generated every time the user travels to a destination, and in the deleting step, a behavior history generated on a journey to a destination having a low degree of relatedness to the specified point is specified as data to be deleted from the database.

Locations serving as destinations of the user include, for example, locations visited continuously and locations visited only once. It is therefore possible to estimate that a location visited continuously is a destination having a high utility value to the user.

Hence, according to the configuration or the method described above, data indicating the longitude and latitude of a destination, a movement route to the destination, and the behavior of the user at the destination, for example, are stored in the database as the behavior history of the user. A behavior history obtained on a journey to a destination having a low degree of relatedness to the specified point is then specified from among the behavior histories as the behavior history to be deleted from the database. In so doing, behavior histories relating to destinations having a high degree of relatedness to the specified point, or in other words behavior histories obtained on journeys to destinations that are likely to be revisited by the user, can be held in the database preferentially.

In an aspect of the invention, the point serving as the nucleus of the behavior of the user is a geographical base of the user, and the data management unit determines the degree of relatedness between the specified point and the behavior history on the basis of a distance from the geographical base of the user to the destination.

In an aspect of the invention, in the point specifying step, a geographical base of the user is specified as the point serving as the nucleus of the behavior of the user, and in the behavior history specifying step, the degree of relatedness between the specified point and the behavior history is determined on the basis of a distance from the geographical base of the user to the destination.

The distance from the geographical base of the user, such as the home of the user or a company to which the user belongs, to the destination is likely to be used by the user as an index when selecting a destination, and therefore the distance from the geographical base of the user to the destination may be used as material for determining the degree of relatedness between the behavior history of the user and the geographical base.

Hence, according to the configuration or the method described above, the degree of relatedness between the specified point and the behavior history is determined on the basis of the distance from the geographical base of the user to the destination. As a result, the behavior history to be deleted can be specified accurately on the basis of the distance from the geographical base of the user to the destination.

In an aspect of the invention, the data management unit specifies a behavior history generated on a journey to a destination located a relatively great distance from the geographical base of the user as the behavior history having the low degree of relatedness to the specified point.

Of the destinations visited by the user in the past, destinations close to the base of the user, such as the home of the user or the like, are typically more likely to be visited by the user in the near future. Conversely, the user is less likely to revisit a destination far from his/her home or the like. In other words, the degree of relatedness between the geographical base of the user, such as his/her home, and a destination is higher when the distance between the base and the destination is relatively small, and the degree of relatedness between the geographical base of the user, such as his/her home, and a destination is lower when the distance between the base and the destination is relatively great.

Hence, according to the configuration or the method described above, a behavior history indicating a destination relative far from the geographical base of the user is specified as a behavior history having a low degree of relatedness to the point. Accordingly, when a number of behavior histories stored in the database reaches an upper limit value of the database, a behavior history indicating a destination relative far from the geographical base of the user, or in other words a behavior history indicating a destination that is unlikely to be revisited by the user, is deleted from the database. As a result, behavior histories that are unlikely to be revisited by the user are deleted from the database preferentially, and conversely, behavior histories that are likely to be revisited by the user are held in the database on a long-term basis.

In an aspect of the invention, the data management unit manages acquisition dates of the behavior histories of the user, and specifies the behavior history to be deleted preferentially from the database in consideration of the acquisition dates of the behavior histories.

An aspect of the invention further includes a step of attaching an acquisition date to the behavior history of the user when the behavior history is obtained, wherein, in the behavior history specifying step, the behavior history to be deleted preferentially from the database is specified while in consideration of the acquisition dates attached to the behavior histories.

Behavior patterns of the user also correlate with dates on which the various behaviors were performed by the user. For example, relatively new behavior histories reflect current behavior patterns of the user, and therefore these behavior patterns are likely to be repeated in the future. In other words, a behavior history having a relatively new acquisition date, from among the appropriately obtained behavior histories, is likely to reflect a current behavior of the user, and therefore has a high utility value.

Hence, by specifying the behavior history of the user to be deleted preferentially from the database in consideration of the acquisition dates of the behavior histories, as in the configuration or the method described above, the need to delete the behavior history can be determined from the viewpoint of both the degree of relatedness and the acquisition date, and as a result, the behavior histories can be managed more accurately.

Further, when the point serving as the nucleus of the behavior of the user is set as the geographical base of the user, for example, and behaviors generated as the user travels to destinations from the geographical base are managed as the behavior histories, the degree of relatedness between the behavior history and the point can be determined on the basis of the acquisition date of the behavior history and the distance from the geographical base of the user to the destination. As a result, a behavior history representing a behavior performed in the vicinity of the point (i.e. the geographical base of the user) is considered to be a behavior history having a high utility value even when the acquisition date of the behavior history is relatively old, for example, and therefore deletion of the behavior history from the database is suppressed. Further, a behavior history representing a behavior performed by the user in the vicinity of the point and having a relatively new acquisition date, for example, is considered to be a behavior history having an extremely high utility value, and therefore the behavior history is stored in the database on a long-term basis.

In an aspect of the invention, the data management unit multiplies an element indicating the degree of relatedness between the specified point and the behavior history and the acquisition date of the behavior history by respective coefficients, and specifies the behavior history to be deleted preferentially from the database on the basis of two multiplication values obtained by the multiplication.

According to the above configuration, by multiplying the respective coefficients by the element indicating the degree of relatedness between the specified point and the behavior history and the acquisition date of the behavior history, a degree to which the element and the acquisition date affect specification of the deletion subject behavior history can be modified. In other words, by modifying the coefficients, the effect of the acquisition date and the effect of the distance can be modified dynamically when deleting a behavior history. Hence, when the element indicating the degree of relatedness between the specified point and the behavior history is set as the distance, for example, the behavior histories can be managed with emphasis on the distance by reducing the coefficient that is multiplied by the acquisition date and increasing the coefficient that is multiplied by the distance serving as the element. As a result, the behavior histories can be managed with a greater degree of freedom.

In an aspect of the invention, the data management unit determines the degree of relatedness between the specified point and the behavior history on the basis of at least one of a generation frequency of behavior histories representing identical or similar behavior, from among the behavior histories emanating from the specified point, and a stay time of the user at a target point arrived at from the specified point.

Of the behaviors performed by the user, behaviors performed repeatedly from the point serving as the nucleus are more unique to the user, and are therefore likely to be performed continuously in the future. Behavior histories representing such behaviors therefore tend to have a high utility value to the user.

Further, the time a certain user stays in a predetermined store or a viewing time during which the user views a predetermined site (i.e. the stay time), for example, tends to reflect preferences of the user, and therefore stores having long stay times and sites having long viewing times have a higher utility value to the user and are likely to be used continuously. In other words, behavior histories representing such behaviors of the user have a high utility value.

Hence, by determining the degree of relatedness between the specified point and the behavior history on the basis of at least one of the generation frequency of the behavior history and the stay time of the user at the target point, as in the configuration described above, behavior histories having a high utility value to the user can be stored in the database preferentially.

In an aspect of the invention, the behavior history is a movement history of a vehicle operated by the user.

According to the above configuration, for example, movement histories of the vehicle obtained via a portable information terminal owned by the user or an in-vehicle information terminal installed in the vehicle are stored in the database as the behavior histories of the user. Therefore, even movement histories of the vehicle whose utility value cannot be determined easily from the acquisition date alone or movement histories of a vehicle used as means of transportation that travels to various destinations both near and far can be held in the database with stability as movement histories having a high utility value to the user.

Furthermore, a list of destinations to which the user has traveled in the past or a suggested travel route used by the user in the past may be created on the basis of the movement histories stored in the database, and the created destination list or suggested route may be presented to the user via a navigation system installed in the vehicle, for example. At this time, the destination list or suggested route presented to the user is created on the basis of behavior histories that have a high utility value to the user and are likely to be used repeatedly, and therefore a destination list or a suggested route that is likely to be in alignment with the wishes of the user is presented to the user.

In an aspect of the invention, the point specification unit learns information relating to departure and arrival points including departure points from which the user departs and arrival points at which the user arrives after departing from the departure points, and estimates a departure point having a relatively wide distribution of arrival points emanating therefrom, from among the learned departure and arrival points, to be the point serving as the nucleus of the behavior of the user.

The behavior histories of a certain user tend to represent journeys from a home base to various target locations such as companies and stores, for example, and therefore the departure points and arrival points of the behavior histories are constituted by a common departure point and arrival points distributed in various directions and over various regions from the departure point. When, on the other hand, a company or the like at which the stay time is long, for example, is set as the departure point, there is a strong tendency for the arrival point to be limited to a location such as home, and therefore variation among the arrival points relative to the departure point is small.

Hence, according to the configuration described above, information relating to the departure and arrival points, including information relating to the longitude and latitude and so on of the departure points and the arrival points, is learned, and on the basis of the learned information, a departure point having a wide arrival point distribution, from among nucleus departure points, is estimated to be the point serving as the nucleus of the behavior of the user. In so doing, the base of the vehicle can be estimated accurately on the basis of the variation among the departure and arrival points. Accordingly, the point serving as the nucleus of the behavior of the user can be specified with a high degree of precision from the behavioral tendencies of the user, whereupon the degree of relatedness between a behavior history and the specified point can be determined on the basis of the specified point. As a result, the user does not have to register the point serving as the nucleus of his/her own behavior in advance, and therefore the convenience of the behavior history management system and behavior history management method described above can be improved even further.

BRIEF DESCRIPTION OF THE DRAWINGS

[FIG. 1] FIG. 1 is a block diagram showing a schematic configuration of a system to which a behavior history management system and a behavior history management method according to a first embodiment of the invention are applied.

[FIG. 2] FIG. 2A is a view showing an example of movement histories stored in a database, and FIG. 2B is a view showing an example of deletion appropriateness levels of the movement histories.

[FIG. 3] FIG. 3 is a flowchart showing an example of movement history deletion procedures according to the behavior history management system and behavior history management method of this embodiment.

[FIG. 4] FIG. 4 shows images of the movement histories stored in the database, wherein FIGS. 4A to 4E are views showing examples of movement history deletion according to the behavior history management system and behavior history management method of this embodiment.

[FIG. 5] FIG. 5A is a view showing an example of deletion subject movement history specification based only on an acquisition date of the movement history, and FIG. 5B is a view showing an example of deletion subject movement history specification according to the behavior history management system and behavior history management method of this embodiment.

[FIG. 6] FIG. 6 is a block diagram showing a schematic configuration of a system to which a behavior history management system and a behavior history management method according to a second embodiment of the invention are applied.

[FIG. 7] FIGS. 7A to 7C are views showing examples of base estimation by a point specification unit according to this embodiment.

[FIG. 8] FIG. 8 is a block diagram showing a schematic configuration of a system to which a behavior history management system and a behavior history management method according to a third embodiment of the invention are applied.

[FIG. 9] FIG. 9 is a view showing an example of deletion subject movement history specification according to the behavior history management system and behavior history management method of this embodiment.

[FIG. 10] FIG. 10 is a block diagram showing a schematic configuration of a system to which a behavior history management system and a behavior history management method according to a fourth embodiment of the invention are applied.

[FIG. 11] FIG. 11 is a view showing an example of degrees of relatedness between a homepage serving as a nucleus of user behavior and websites accessed using the homepage as a base.

[FIG. 12] FIG. 12 is a view showing an example of deletion subject movement history specification according to another embodiment of the behavior history management system and behavior history management method of the invention.

[FIG. 13] FIG. 13 is a view showing an example of deletion subject movement history specification according to another embodiment of the behavior history management system and behavior history management method of the invention.

[FIG. 14] FIG. 14 is a view showing an example of histories managed on the basis of user preferences according to another embodiment of the behavior history management system and behavior history management method of the invention.

MODES FOR CARRYING OUT THE INVENTION

(First Embodiment)

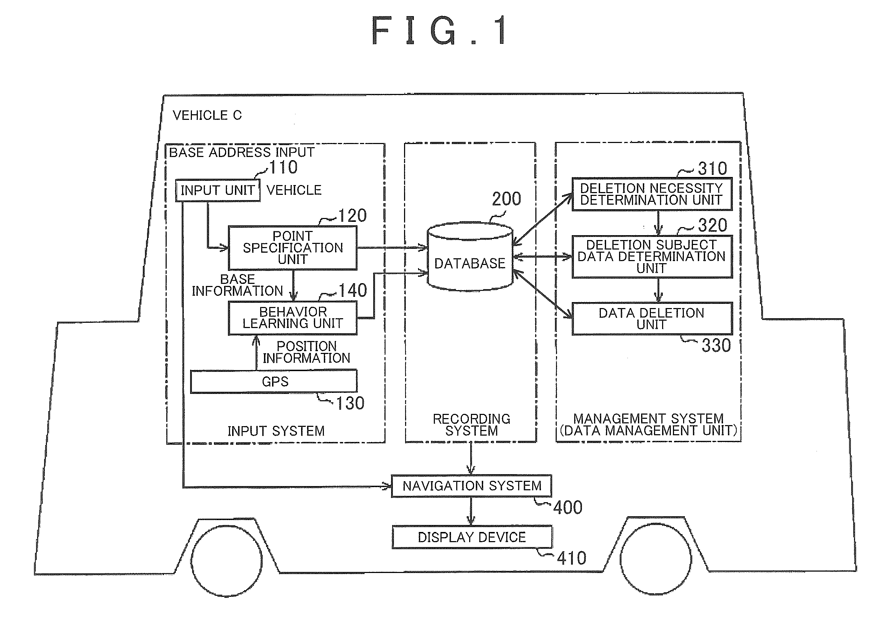

A first specific embodiment of a behavior history management system and a behavior history management method according to the invention will be described below with reference to FIGS. 1 to 5. For example, the behavior history management system and behavior history management method according to this embodiment are used to manage movement histories of a vehicle that moves using a home or the like of a driver as a base. Further, in the behavior history management system and behavior history management method according to this embodiment, a geographical base of the user is employed as a point serving as a nucleus of behavior of the user, while the geographical base and geographical movement of the user are set as a behavior history category.

As shown in FIG. 1, the behavior history management system according to this embodiment is installed in a vehicle C such as an automobile, for example, and is constituted mainly by an input system into which various information is input, a recording system in which the information input into the input system is recorded, and a management system (a data management unit) that manages the information recorded in the recording system.

Of these systems, the input system is provided with an input unit 110 on which a driver or the like of the vehicle C performs various operations. For example, the input unit 110 is used when information relating to a home address of the driver or the like is input as a point serving as a nucleus of the behavior of the driver. When information relating to the home address of the driver or the like is input into the input unit 110, the input unit 110 outputs the input information to a point specification unit 120 that specifies a geographical base of the driver on the basis of the information. Further, when route guidance to a destination is performed by a navigation system 400 installed in the vehicle C, the input unit 110 is used to input a store name, a region name, an address, or the like serving as the destination, for example. When the driver inputs information relating to a destination into the input unit 110 during use of the navigation system 400, the input unit 110 outputs the input information relating to the destination to the navigation system 400.

When the information relating to the home address of the driver or the like is input into the point specification unit 120 from the input unit 110, the point specification unit 120 specifies a point indicating an absolute position represented by the address or the like as the geographical base of the driver. The point specification unit 120 then outputs information relating to the specific point to a database 200 constituting the recording system and a behavior learning unit 140 that learns behaviors of the vehicle C.

The input system is also provided with a global positioning system (GPS) 130. The GPS 130 receives a GPS satellite signal for detecting an absolute position of the vehicle C, and detects the position of the vehicle appropriately on the basis of the received GPS satellite signal. After detecting position information relating to the vehicle C, the GPS 130 outputs the detected position information to the behavior learning unit 140. As a result, position information indicating the longitude and latitude of the vehicle C, which vary as the vehicle C travels, is input appropriately into the behavior learning unit 140.

When the position information relating to the vehicle C is input into the behavior learning unit 140 from the GPS 130, the behavior learning unit 140 appropriately learns a movement route from a departure point from which the vehicle C departs to an arrival point (the destination) at which the vehicle C arrives, the name and the longitude and latitude of the arrival point, and so on, for example. Further, the behavior learning unit 140 learns a distance from the geographical base of the vehicle C to the arrival point on the basis of the position information relating to the vehicle C input from the GPS 130 and the information relating to the geographical base input from the point specification unit 120. Furthermore, the behavior learning unit 140 according to this embodiment learns a date at which a learning subject behavior of the vehicle C occurred by attaching an acquisition date to the learning subject information. The behavior learning unit 140 then outputs a learning result appropriately to the database 200 as a movement history (a behavior history) of the vehicle C.

When the information relating to the geographical base of the driver is input into the database 200 from the point specification unit 120, the database 200 registers this information as information indicating the geographical base of the driver. Further, when a movement history of the vehicle C is input into the database 200 from the behavior learning unit 140, the database 200 stores the input movement history appropriately. Hence, a movement history of the vehicle C is stored in the database 200 appropriately every time the vehicle C arrives at a destination set by the driver, with the result that movement histories of the vehicle C accumulate in the database 200. Further, in this embodiment, when a movement history input from the behavior learning unit 140 is a history indicating movement toward an identical destination to that of a movement history already stored in the database 200, for example, the movement history already stored in the database 200 is overwritten by the movement history newly input from the behavior learning unit 140. Note that an amount of movement history data that can be stored in the database 200 is limited in proportion to a capacity of the database 200.

Meanwhile, the management system that manages the database 200 is provided with a deletion necessity determination unit 310 that determines whether or not the amount of movement history data accumulated in the database 200 has reached the amount of data that can be stored in the database 200. The deletion necessity determination unit 310 monitors the amount of movement history data accumulated in the database 200 to determine whether or not the data amount has exceeded the capacity of the database 200.

After determining that the amount of movement history data accumulated in the database 200 has exceeded the capacity of the database 200 due to an increase in the number of movement histories of the vehicle C, the deletion necessity determination unit 310 outputs a determination result to a deletion subject data determination unit 320 that specifies a movement history to be deleted from the movement histories stored in the database 200.

When a determination result indicating the necessity to delete a movement history is input into the deletion subject data determination unit 320 from the deletion necessity determination unit 310, the deletion subject data determination unit 320 specifies a movement history relating to a destination that is relatively far from the geographical base of the driver of the vehicle C, from among the movement histories registered in the database 200, as a deletion subject movement history. The deletion subject data determination unit 320 then outputs a specification result to a data deletion unit 330 that executes movement history deletion processing on the basis of the specification result.

When the specification result generated by the deletion subject data determination unit 320 is input into the data deletion unit 330, the data deletion unit 330 extracts the movement history specified as the history to be deleted from the database 200 on the basis of the specification result, and deletes the extracted movement history. By executing this movement history deletion processing in accordance with the amount of movement history data accumulated in the database 200, the amount of movement history data accumulated in the database 200 is held within a range of the capacity of the database 200. As a result, a newly obtained movement history is stored in the database 200 in place of the deleted movement history.

Meanwhile, when the driver of the vehicle C selects a destination, for example, the navigation system 400 displays the movement histories accumulated in the database 200 on a display device 410 constituted by a liquid crystal display or the like. More specifically, for example, the navigation system 400 creates image data representing a list of names and the like of past arrival points of the vehicle C on the basis of the movement histories accumulated in the database 200, and outputs the created image data to the display device 410. As a result, a list of information indicating the past arrival points of the vehicle C, or in other words names and so on of arrival points such as stores used by the driver or the like of the vehicle C, is displayed on the display device 410. Further, when, for example, information relating to a candidate location selected by the driver from among the arrival points (candidate locations) on the list displayed on the display device 410 is input into the navigation system 400 from the input unit 110, the navigation system 400 performs route guidance to the candidate location. More specifically, for example, the navigation system 400 displays on the display device 410 movement routes used previously by the vehicle C as candidate routes to the candidate location on the basis of the movement histories accumulated in the database 200. As a result, a candidate location list screen and a candidate route selection screen created on the basis of the movement histories of the vehicle C are displayed visibly on the display device 410. When the driver selects a certain candidate location from the displayed candidate locations and selects a candidate route thereto, the navigation system 400 performs route guidance to the candidate location along the candidate route through image guidance using the display device 410 and audio guidance using an audio device not shown in the drawing.

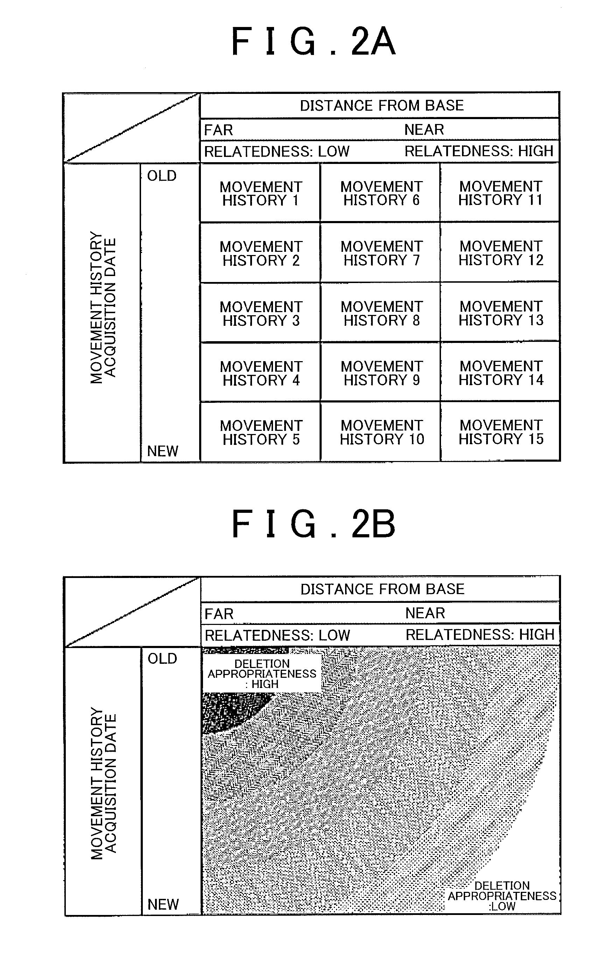

Next, movement history deletion according to the behavior history management system and behavior history management method of the invention will be described with reference to FIG. 2.

As shown in FIG. 2A, in this embodiment, a deletion subject movement history is specified from movement histories 1 to 15 stored in a stream data management unit 200 on the basis of a degree of relatedness between the geographical base of the driver (user) and the destination. More specifically, destinations located further from the geographical base of the user are, due to their distance from the geographical base, typically less likely to be used in future. Therefore, movement histories relating to destinations that are far from the geographical base of the user have a lower degree of relatedness to the geographical base of the user. Further, movement histories having older acquisition dates are less likely to match current behavior patterns of the user, and therefore have a low utility value as the candidate locations and candidate routes used by the navigation system 400. Accordingly, movement histories having older acquisition dates have a lower degree of relatedness to the geographical base of the user.

On the other hand, destinations located on the periphery of the geographical base are useful due to their closeness to the geographical base of the user, and are therefore more likely to be used in future. Accordingly, movement histories relating to destinations that are close to the geographical base of the user have a higher degree of relatedness to the geographical base of the user. Further, movement histories having newer acquisition dates are more likely to match the current behavior patterns of the user, and therefore have a high utility value as the candidate locations and candidate routes used by the navigation system 400. Accordingly, movement histories having newer acquisition dates have a higher degree of relatedness to the geographical base of the user.

Hence, in this embodiment, movement histories relating to destinations that are far from the geographical base and have older acquisition dates are determined to have a low degree of relatedness to the geographical base and are therefore specified as deletion subject movement histories. Note that in this embodiment, a "deletion appropriateness" indicating whether or not deletion from the database 200 is appropriate is used when deleting a movement history. The deletion appropriateness is calculated using a following Equation (A), for example, in which a coefficient relating to the acquisition date of the movement history is set as "$\alpha$" and a coefficient relating to the distance from the geographical base to the destination is set as "$\beta$".

Deletion   appropriateness   =   (calculation   date   –   movement   history   acquisition date) $\times \alpha$ + distance from base $\times \beta$                    (A)

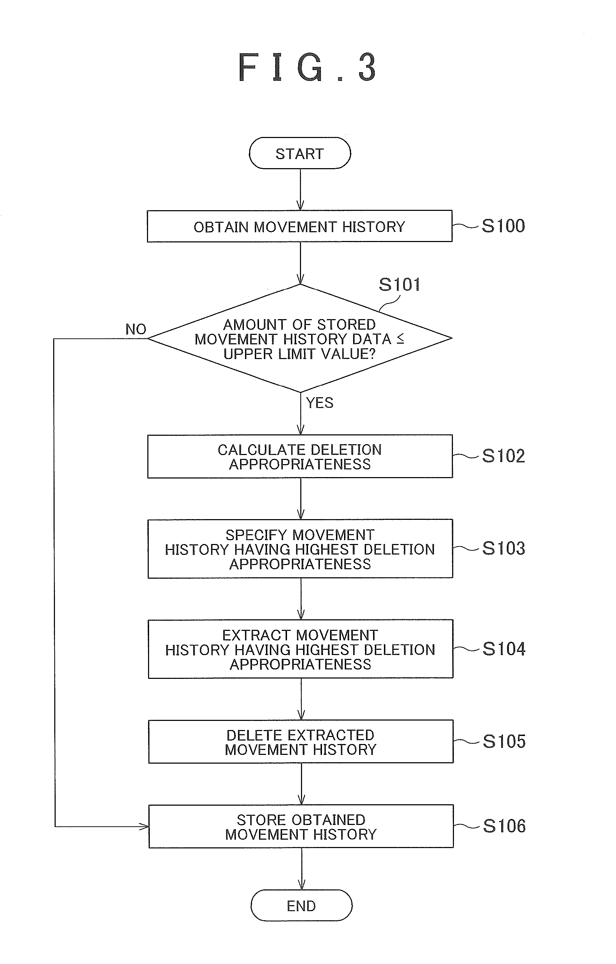

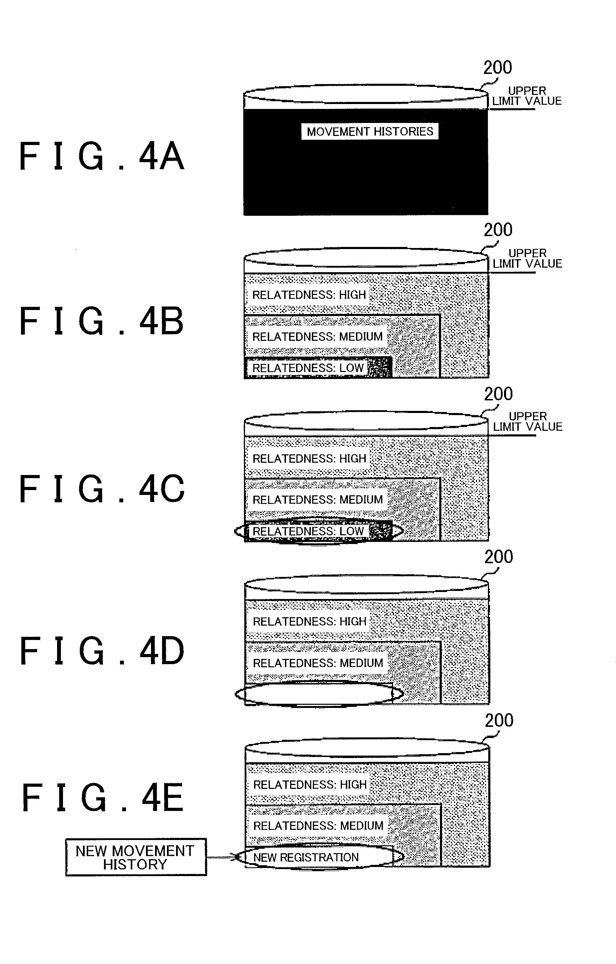

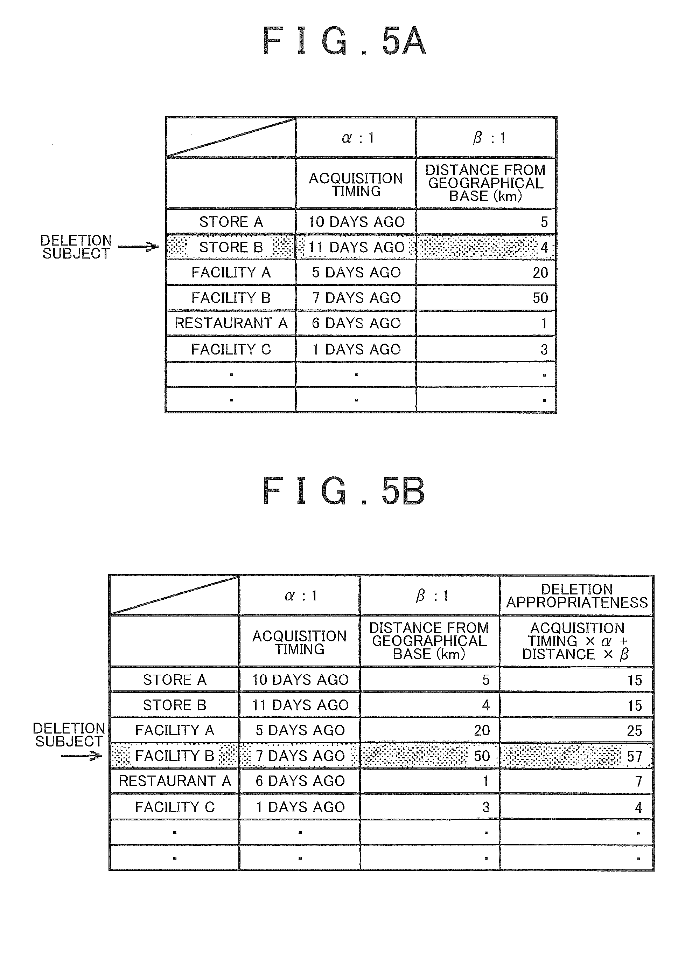

In Equation (A), the "calculation date" indicates a calculation timing of the deletion appropriateness, and the "movement history acquisition date" indicates the date on which the movement history subject to deletion appropriateness calculation was obtained. Further, any desired values may be set as the coefficient "$\alpha$" and the coefficient "$\beta$". By setting the coefficient "$\beta$" to be larger than the coefficient "$\alpha$", for example, an effect of the distance from the geographical base to the destination on the deletion appropriateness is increased. Conversely, by setting the coefficient "$\alpha$" to be larger than the coefficient "$\beta$", for example, an effect of the movement history acquisition date on the deletion appropriateness is increased. Furthermore, the deletion appropriateness decreases as the degree of relatedness between the geographical base and the movement history increases, and conversely increases as the degree of relatedness between the geographical base and the movement history decreases. As shown in FIG. 2B, during management for maintaining the capacity of the database 200, the movement history having the largest deletion appropriateness (the movement history 1 in FIG. 2A) is deleted from the database 200 preferentially.
In this embodiment, by deleting a part of the movement histories stored in the database 200 appropriately under these principles, movement histories having a high degree of relatedness to the geographical base of the user and relating to destinations that are highly likely to be reused by the user are held in the database 200 with stability. As a result, a storage area required to store a newly obtained movement history can be secured in the database 200 while holding movement histories having a high utility value on a long term basis.
Actions of the behavior history management system and behavior history management method according to this embodiment will be described below with reference to FIGS. 3 and 4.
As shown in FIG. 3, when a new movement history of the vehicle C is obtained as the vehicle C travels (step S100), a determination is made as to whether or not the amount of movement history data accumulated in the database 200 has reached a holdable upper limit value of the database 200 (step S101).
When the amount of movement history data accumulated in the database 200 has reached the upper limit value (step S101: YES), the deletion appropriateness correlating with the degree of relatedness between each movement history accumulated in the database 200 and the geographical base of the user is calculated (step S102). As a result, the respective movement histories accumulated to the upper limit value of the database 200, as shown in FIG. 4A, are specified as movement histories having, for example, a "high", "medium", or "low" degree of relatedness to the geographical base of the user, and therefore a "low", "medium", or "high" deletion appropriateness, as shown in FIG. 4B.
Next, as shown in step S103 of FIG. 3, the movement history having the lowest degree of relatedness to the geographical base of the user, or in other words the movement history having the highest deletion appropriateness, is specified. The specified movement history is then extracted from the database 200 (step S104), whereupon the extracted movement history is deleted from the database 200 (step S105). Hence, the movement history having the lowest degree of relatedness to the geographical base of the user is specified from the movement histories accumulated in the database 200, as shown in FIG. 4C, whereupon the specified movement history is deleted from the database 200, as shown in FIG. 4D.
Next, as shown in step S106 of FIG. 3, the movement history obtained in step S100 is stored in the database 200. As a result, the newly obtained movement history is stored in the database 200 in place of the movement history having the "low" degree of relatedness, as shown in FIG. 4E.
Next, updating of the movement histories managed using the behavior history management system and behavior history management method according to this embodiment will be described with reference to FIGS. 5A and 5B in comparison with a method of updating movement histories managed by a conventional system. Note that in this example, the coefficients "$\alpha$" and "$\beta$" are both set at "1".
As shown in FIG. 5A, it is assumed, for example, that a movement history generated when the vehicle C traveled to "Store B", which is located in a position "4 km" from a geographical base such as the home of the user, was obtained "11 days ago", for example. The movement history relating to "Store B" has the oldest acquisition date of the movement histories shown in FIG. 5A, and therefore, in the conventional system, the movement history relating to "Store B" is specified as a deletion subject. On the other hand, "Store B" is a destination located closer to the geographical base of the user than other destinations "Store A", "Facility A", and "Facility B", and is therefore likely to be used again by the user. With a deletion method based only on the acquisition date, however, the movement history relating to "Store B", which is likely to be used again by the user, is deleted preferentially.
As shown in FIG. 5B, on the other hand, with the behavior history management system and behavior history management method according to this embodiment, the distance between the movement history and the geographical base is taken into account in addition to the acquisition date of the movement history, and therefore a movement history relating to "Facility B", for example, which is located in a position "50 km" from the geographical base, is specified as the deletion subject. In other words, although the movement history relating to "Facility B" was obtained "7 days ago", "Facility B" is further from the geographical base than all of the other destinations "Store A", "Store B", "Facility A", "Restaurant A", "Facility C", ..., and is therefore predicted to have a low likelihood of being reused by the user.

Hence, in this embodiment, the movement history relating to "Facility B", which is unlikely to be reused, is deleted preferentially from the database 200. Accordingly, movement histories relating to destinations that are more likely to be used based on the distance thereto from the geographical base of the user are held in the database 200 with stability. As a result, when the user uses the vehicle C, "Store B", for example, which was not specified as a deletion subject, can be presented to the driver as a candidate destination by referring to the movement histories held in the database 200, whereupon a candidate route from the geographical base to "Facility B" can be presented to the driver.

With the behavior history management system and behavior history management method according to this embodiment, described above, following effects are obtained.

(1) The point serving as the nucleus of the behavior of the user is specified, whereupon a movement history having a low degree of relatedness to the specified point is specified. Then, during movement history deletion from the database 200, the movement history having a low degree of relatedness to the point specified as the nucleus of the behavior of the user is deleted preferentially. Hence, movement histories having a high degree of relatedness to the point specified as the nucleus of the behavior of the user are held with stability in the database 200. As a result, movement histories having a high utility value to the user can be held preferentially in the database 200 while storing obtained movement histories appropriately every time a movement history of the user is obtained.

(2) A history representing a behavior of the user is stored in the database 200 as a movement history of the user every time the user travels to a destination. A movement history obtained on a journey to a destination having a low degree of relatedness to the point specified as the nucleus of the user is then specified as a deletion subject to be deleted from the database 200. As a result, movement histories obtained on journeys to destinations having a high degree of relatedness to the specified point, or in other words destinations that are likely to be revisited by the user, can be held in the database 200 preferentially.

(3) The geographical base of the user is specified as the point serving as the nucleus of the behavior of the user. The degree of relatedness between the point serving as the nucleus of the behavior of the user and the movement history is then determined on the basis of the distance from the geographical base of the user to the destination. As a result, the deletion subject movement history can be specified on the basis of an element by which, in contrast to the acquisition date of the movement history, it is possible to predict the likelihood of reuse by the user.

(4) A movement history obtained on a journey to a destination that is relatively far from the geographical base of the user is specified as a movement history having a low degree of relatedness to the point serving as the nucleus of the behavior of the user. Movement histories that are unlikely to be revisited by the user are thus deleted preferentially from the database 200 such that movement histories that are likely to be revisited by the user are held in the database 200 on a long term basis. Furthermore, movement histories relating to destinations that are unlikely to be used by a typical user are deleted preferentially from the database 200, enabling an improvement in the versatility of the behavior history management system and behavior history management method described above.

(5) The acquisition dates of the movement histories of the user are managed in conjunction such that the movement history to be deleted from the database 200 preferentially is specified while also taking into account the acquisition date included in the movement history. Hence, the need for data deletion can be determined on the basis of both the degree of relatedness to the movement base of the user and the acquisition date, and therefore the deletion subject movement history can be specified more accurately. Accordingly, a movement history that does not need to be stored in the database 200 in terms of both the degree of relatedness thereof to the movement base of the user and the acquisition date thereof is deleted from the database 200 preferentially. As a result, movement histories relating to destinations that are highly unlikely to be used by the user are deleted preferentially, thereby minimizing effects on the user from deletion of the movement histories.

(6) The coefficients "$\alpha$" and "$\beta$" are multiplied respectively by the acquisition date of the movement history and the distance from the geographical base of the user to the destination. The movement history to be deleted preferentially from the database 200 is then specified on the basis of two multiplication values obtained from multiplication of the coefficients "$\alpha$" and "$\beta$". In so doing, respective degrees to which the acquisition date of the movement history and the distance from the geographical base of the user to the destination affect specification of the deletion subject movement history can be modified. Hence, by reducing the coefficient that is multiplied by the acquisition date and increasing the coefficient that is multiplied by the distance element, for example, movement history management can be performed with emphasis on the distance. As a result, movement history management can be performed with a greater degree of freedom.

(7) A movement history of the vehicle C operated by the user is set as the behavior history category, and the movement history is managed. Therefore, movement histories having a high utility value to the user can be held in the database 200 with stability even in the case of movement histories whose utility value cannot be determined easily from the acquisition date alone and movement histories of a vehicle used as means of transportation that travels to various destinations both near and far. Further, candidate locations and candidate routes to destinations can be presented to the driver on the basis of the movement histories held in the database 200.

(Second Embodiment)

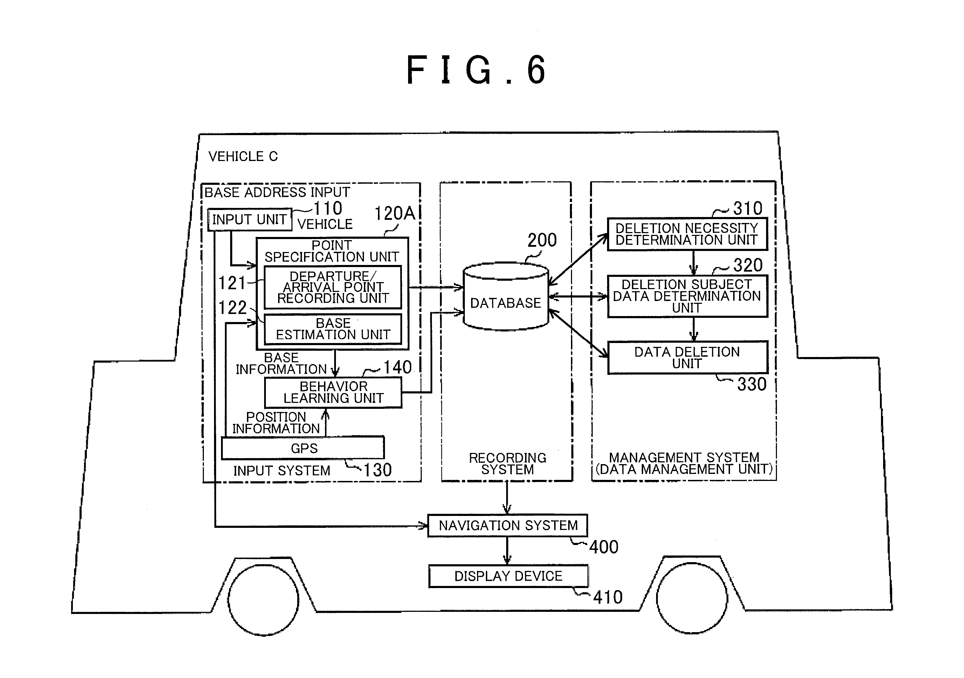

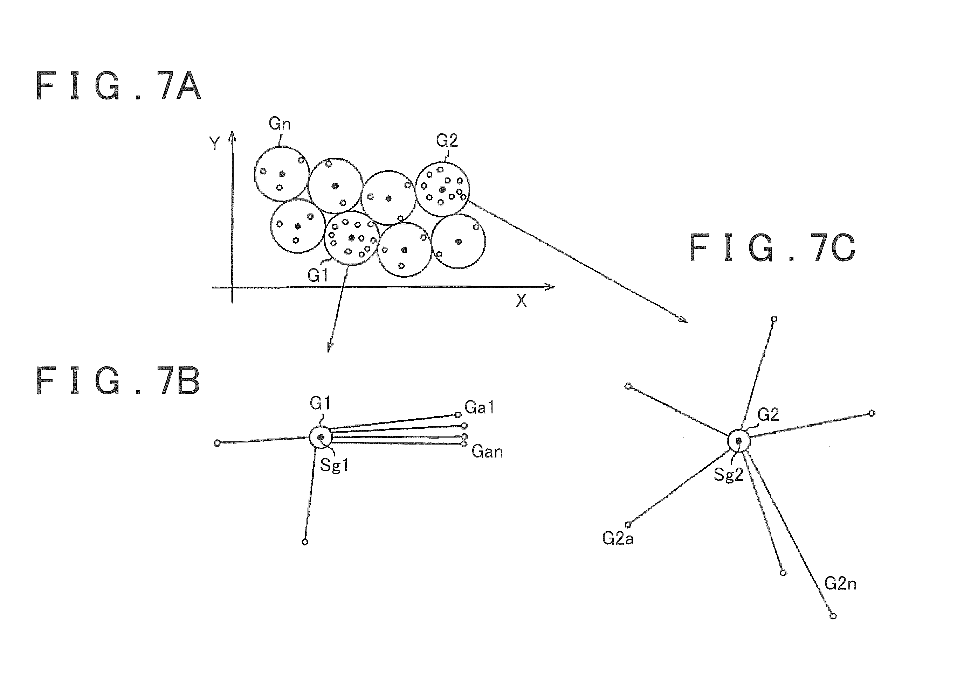

Next, a second embodiment of the behavior history management system and behavior history management method according to the invention will be described with reference to FIGS. 6 and 7, which correspond to FIG. 1, while focusing on differences with the first embodiment. Note that the behavior history management system and behavior history management method according to this embodiment have a similar basic configuration to the first embodiment. Therefore, identical reference symbols have been allocated in FIG. 6 to substantially identical elements to the first embodiment, and duplicate description thereof has been omitted.

As shown in FIG. 6, a point specification unit 120A according to this embodiment includes a departure/arrival point recording unit 121 that records information relating to arrival and departure points including a departure point from which the vehicle C departs and an arrival point at which the vehicle C arrives after departing from the departure point. The departure/arrival point recording unit 121 obtains, from the GPS 130, information indicating a latitude and a longitude when, for example, an accessory position (ACC) of the vehicle C in a stationary condition is switched from an OFF condition to an ON condition. The departure/arrival point recording unit 121 then records the position of the vehicle C indicated by the obtained information as the departure point of the vehicle C. Further, the departure/arrival point recording unit 121 obtains, from the GPS 130, latitude/longitude information generated when the ACC is switched from the ON condition to the OFF condition after the vehicle C, having departed from the departure point, arrives at a destination and stops. The departure/arrival point recording unit 121 then records the position of the vehicle C indicated by the obtained latitude/longitude information as the arrival point corresponding to the departure point. Furthermore, the departure/arrival point recording unit 121 relates respectively corresponding departure points and arrival points to each other, and records the related departure points and arrival points as departure/arrival points representing travel histories of the vehicle C.

The point specification unit 120A according to this embodiment also includes a base estimation unit 122 that estimates the base of the vehicle C on the basis of the departure/arrival points recorded by the departure/arrival point recording unit 121. The base estimation unit 122 determines a frequency with which the vehicle C stays at each location on the basis of the information relating to the departure and arrival points obtained from the vehicle C. As regards the locations in which the stay frequency is determined, a predetermined area such as a radius of approximately "100 m", for example, is handled as a single location. In other words, the base estimation unit 122 determines that the stay frequency of the vehicle C in a certain location is high when a large number of departure points of the vehicle C is included in the predetermined area. To estimate the base of the vehicle C, the base estimation unit 122 specifies two upper order representative locations having a high stay frequency. The base estimation unit 122 then extracts information relating to the departure/arrival points including the departure points belonging to the predetermined areas representing the two specified upper order locations from the departure/arrival point recording unit 121. Next, referring to the extracted departure/arrival points, the base estimation unit 122 estimates the location, from among the two upper order locations, having a relatively wide distribution of arrival points emanating therefrom, to be the base of the vehicle C.

The point specification unit 120A according to this embodiment outputs the base estimated by the base estimation unit 122 to be the base of the vehicle C to the database 200 and the behavior learning unit 140 as the geographical base of the driver (user) of the vehicle C. Accordingly, the behavior learning unit 140 learns the distances between geographical base of the user estimated by the point specification unit 120A and the movement histories of the vehicle C and so on, and outputs learning results to the database 200.

Next, estimation of the geographical base of the user by the base estimation unit 122 according to this embodiment will be described with reference to FIG. 7.

As shown in FIG. 7A, it is assumed that groups G1 to Gn of departure points of the vehicle C grouped into predetermined area units are recorded in the departure/arrival point recording unit 121. Here, the base estimation unit 122 first specifies two upper order groups in which the stay frequency of the vehicle C is high from among the departure point groups G1 to Gn. In this example, first, the group G1 having the largest number of departure points within the circular area of all of the groups stored in the departure/arrival point recording unit 121 is specified. Next, the group G2 having the largest number of departure points within the circular area after the group G1 is specified.

Next, a determination is made as to whether or not a difference between the respective numbers of departure points included in the specified groups G1 and G2 is minute. Here, for example, the difference between the respective numbers of departure points included in the groups G1 and G2 is determined to be minute when the difference is equal to or smaller than one tenth of the number of departure points included in the group G1.

When the difference between the respective numbers of departure points included in the groups G1 and G2 is minute, the base estimation unit 122 determines which representative location from among the groups G1 and G2 is to be set as the base of the vehicle C on the basis of a distribution of arrival points emanating from each departure point included in the groups G1 and G2.

In this example, as shown in FIG. 7B, a large majority of a group of arrival points G1a to G1n corresponding to the group of departure points included in the group G1 having the highest stay frequency is distributed in a fixed direction from a representative point Sg1 of the group G1. Accordingly, variation in the directions, distances, and so on of the arrival points G1a to G1n emanating from the representative point Sg1 of the group G1 is also limited.

As shown in FIG. 7C, on the other hand, a group of arrival points G2a to G2n corresponding to the group of departure points included in the group G2 having the highest stay frequency after the group G1 are distributed in many directions from a representative point Sg2 of the group G2. Great variation is also exhibited in the direction, distances, and so on of the arrival points G2a to G2n emanating from the representative point Sg2 of the group G2. Hence, the variation in the directions, distances, and so on of the arrival points G2a to G2n emanating from the representative point Sg2 is greater than the variation in the directions, distances, and so on of the arrival points G1a to G1n emanating from the representative point Sg1 of the group G1.

Therefore, the base estimation unit 122 according to this embodiment sets the representative point Sg2 of the group G2, in which variation among the arrival points emanating therefrom is the greater of the respective representative points Sg1 and Sg2 of the groups G1 and G2, as the base of the vehicle C. In other words, when the group of departure points included in the group G1 represent a parking lot of a company to which the driver of the vehicle C belongs or the like, for example, the arrival points of the vehicle C after departing from the company are highly likely to be limited to the home of the driver or the like, and therefore variation among the arrival points corresponding to the departure point is small. When, on the other hand, the group of departure points included in the group G2 represent the home serving as the base of the driver of the vehicle C, for example, the arrival points of the vehicle C after departing from home are highly likely to be various locations such as the company, stores, and so on, and therefore variation among the arrival points corresponding to the departure point is large.

With the behavior history management system and behavior history management method according to this embodiment, as described above, a following effect is obtained in addition to the aforesaid effects (1) to (7).

(8) The point specification unit 120A is provided with the departure/arrival point recording unit 121 that learns information relating to the departure/arrival points including the departure points from which the vehicle C departs and the arrival points at which the user arrives after departing from the departure points. Further, in the point specification unit 120A, a single departure point, from among the departure/arrival points learned by the departure/arrival point recording unit 121, having a relatively wide distribution of arrival points emanating therefrom is estimated to be the point serving as the nucleus of the behavior of the user. Hence, the point serving as the nucleus of the behavior of the user can be specified from the behavioral tendencies of the user with a high degree of precision, whereby the degree of relatedness between the respective movement histories and the specified point can be determined on the basis of the specified point. As a result, the user does not have to register the point serving as the nucleus of his/her own behavior in the point specification unit 120A in advance, leading to a further improvement in the convenience of the behavior history management system and behavior history management method used to delete behavior histories on the basis of the point specified as the nucleus of the behavior of the user.

(Third Embodiment)

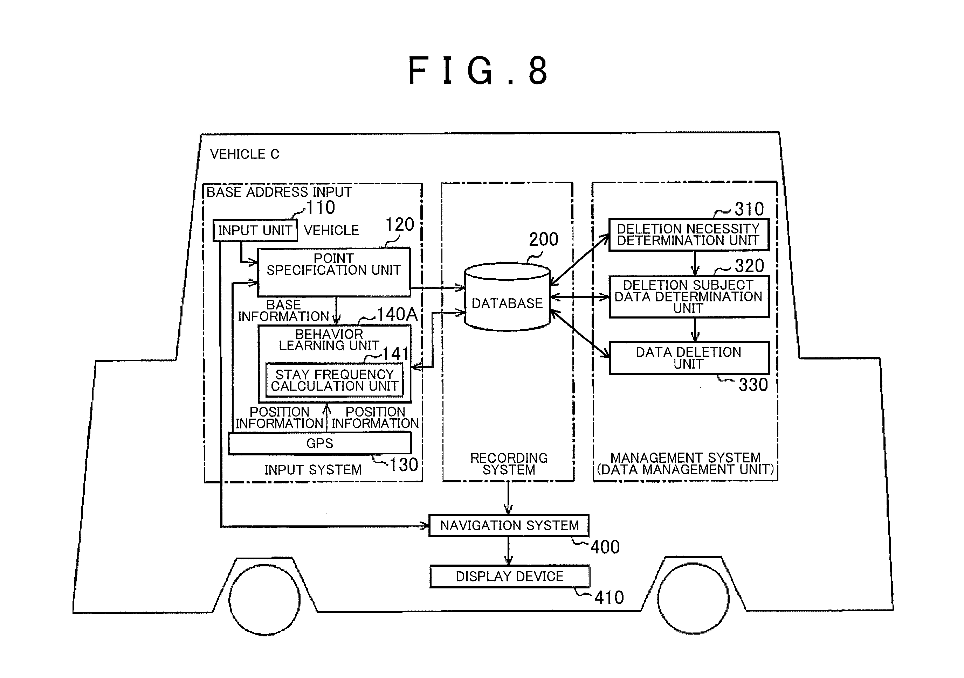

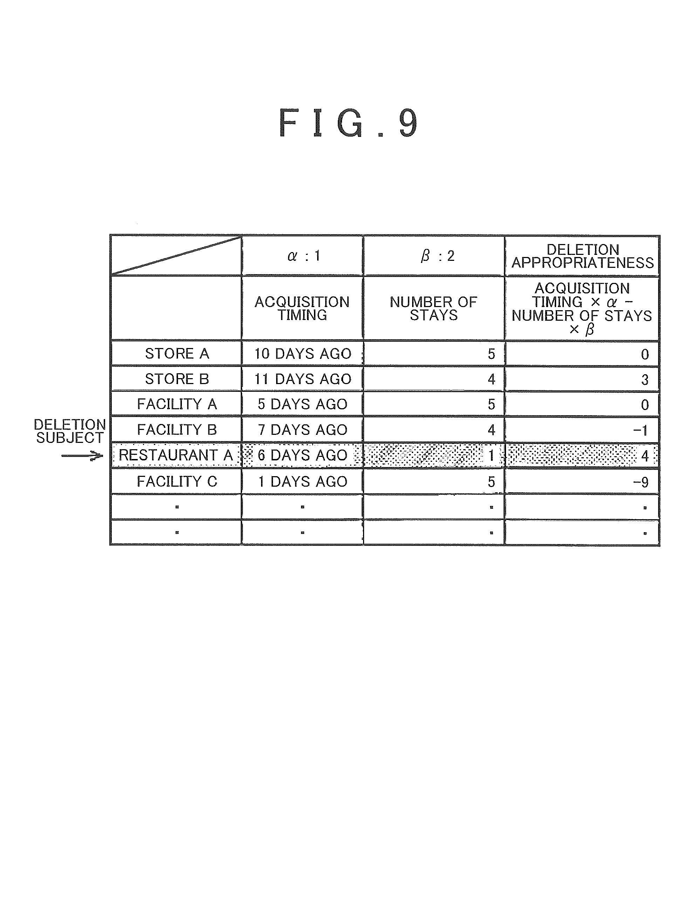

Next, a third embodiment of the behavior history management system and behavior history management method according to the invention will be described with reference to FIGS. 8 and 9, which correspond to FIG. 1, while focusing on differences with the first embodiment. Note that the behavior history management system and behavior history management method according to this embodiment have a similar basic configuration to the first embodiment. Accordingly, identical reference symbols have been allocated in FIG. 8 to substantially identical elements to the first embodiment, and duplicate description thereof has been omitted.

As shown in FIG. 8, a behavior learning unit 140A according to this embodiment includes a stay frequency calculation unit 141 that determines the stay frequency of the vehicle C in each destination. Every time the vehicle C reaches a destination, the stay frequency calculation unit 141 calculates the stay frequency of the vehicle C in the destination reached by the vehicle C on the basis of position information relating to the reached destination and position information relating to the destination included in the movement histories registered in the database 200. The behavior learning unit 140A then outputs information relating to the stay frequency calculated by the stay frequency calculation unit 141 to the database 200 as movement history attribute information of the vehicle C.

Further, the deletion subject data determination unit 320 according to this embodiment determines the deletion appropriateness on the basis of a following Equation (B), and specifies the movement history to be deleted preferentially from the database 200 in accordance with the determined deletion appropriateness.

[0099]   Deletion  appropriateness  =  (calculation  date  –  movement  history

acquisition date) $\times \alpha$ – number of stays $\times \beta$                    (B)

After the deletion appropriateness has been calculated by the deletion subject data determination unit 320 in this manner, the data deletion unit 330 deletes the movement history having the highest deletion appropriateness from the database 200.

Next, updating of the movement histories managed using the behavior history management system and behavior history management method according to this embodiment will be described with reference to FIG. 9. Note that in this example, the coefficient "$\alpha$" relating to the acquisition date is set at "1", and the coefficient "$\beta$" relating to the number of stays is set at "2".

As shown in FIG. 9, in this embodiment, the number of stays in the movement history relating to "Restaurant A", obtained "six days ago", is the smallest of all the destinations. In other words, when the geographical base of the user is set as the departure point, a generation frequency of a movement history traveling toward "Restaurant A" is the smallest of the movement histories emanating from the departure point.

Hence, when the deletion appropriateness is determined from Equation (B), the deletion appropriateness of "Restaurant A" is the highest of all the destinations. In this embodiment, therefore, the movement history relating to "Restaurant A" is deleted from the database 200 preferentially in order to maintain the capacity of the database 200.

With the behavior history management system and behavior history management method according to this embodiment, as described above, a following effect is obtained in addition to the aforesaid effects (1), (2), and (5) to (7) and in place of the effects (3) and (4).

(3A) The degree of relatedness between the point serving as the nucleus of the behavior of the user and the movement history is determined on the basis of the stay frequency of the vehicle C in each destination. As a result, a movement history relating to a destination having a low use frequency is deleted from the database 200 preferentially, whereby movement histories relating to frequently used destinations are held with stability in the database 200. Further, candidate locations that are highly likely to be set as the destination of the user can be presented to the driver on the basis of the movement histories via the navigation system 400.

(Fourth Embodiment)

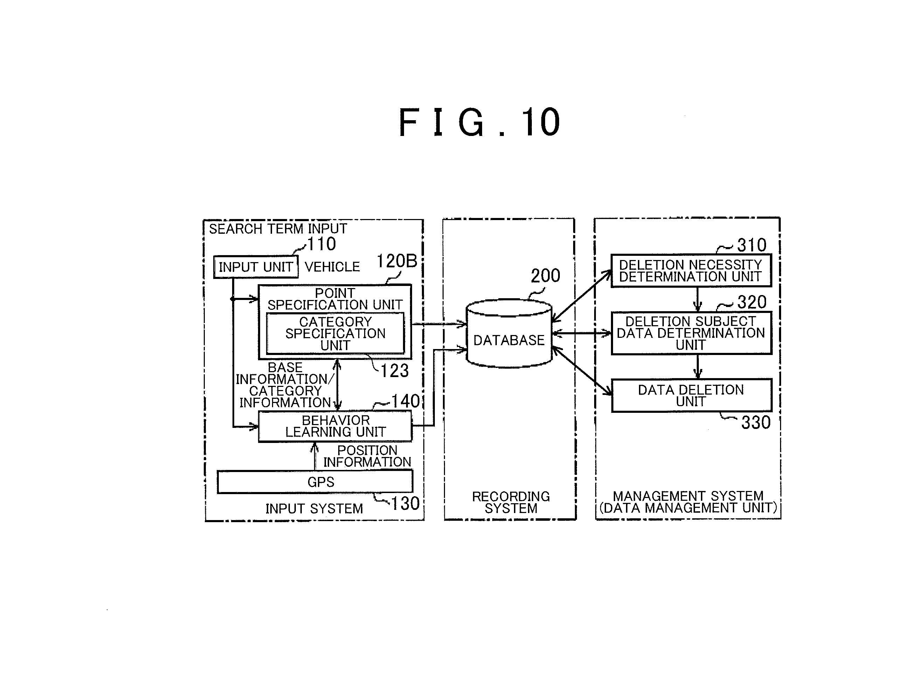

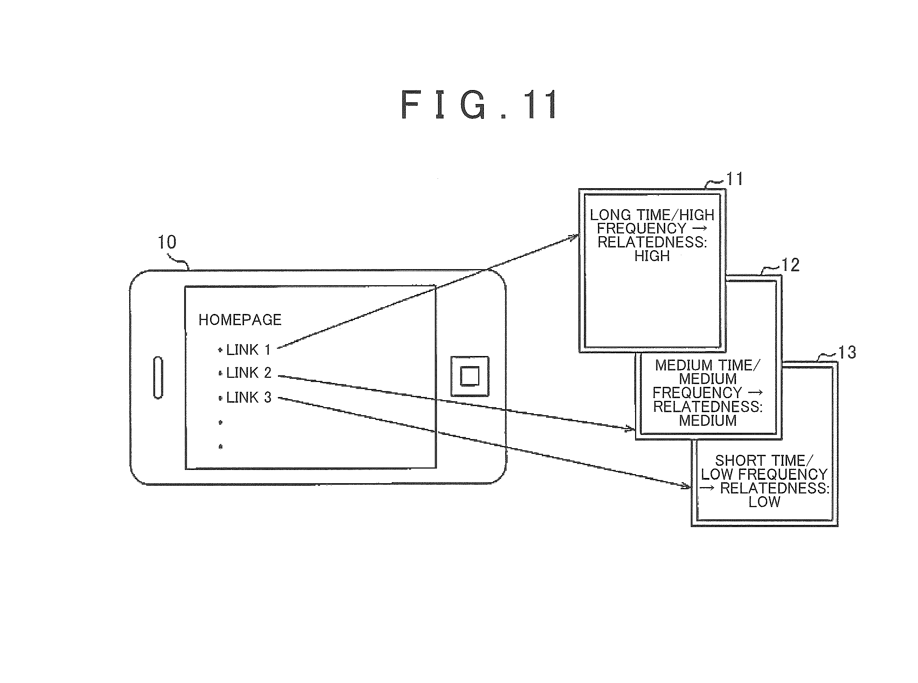

Next, a fourth embodiment of the behavior history management system and behavior history management method according to the invention will be described with reference to FIGS. 10 and 11, which correspond to FIG. 1, while focusing on differences with the first embodiment.

The behavior history management system and behavior history management method according to this embodiment are applied to an information terminal such as a portable information terminal owned by the user, for example, and used to manage behavior histories of the user in relation to a plurality of categories. A system to which the behavior history management system and behavior history management method according to this embodiment is applied has a similar basic configuration to the first embodiment. Therefore, identical reference symbols have been allocated in FIG. 10 to substantially identical elements to the first embodiment, and duplicate description thereof has been omitted.

As shown in FIG. 10, the input unit 110 according to this embodiment is used not only to register the geographical base of the user and select candidate locations, but also to input a search term or the like when viewing an internetwork that can be used via the information terminal, for example.

Further, a point specification unit 120B according to this embodiment includes a category specification unit 123 that specifies a point serving as the nucleus of the behavior of the user in each category on the basis of the information input via the input unit 110 and the learning results of the behavior learning unit 140.

When the information input from the input unit 110 is information indicating an address such as a home address of the user or the like, for example, the category specification unit 123 determines that the category of the behavior history of the user is a movement history, and specifies the geographical base of the user as the point serving as the nucleus of the behavior of the user in this category. Further, when the information input from the input unit 110 is information relating to a search term or the like input during viewing using an internetwork or the like, for example, the category specification unit 123 determines that the category of the behavior history of the user is a viewing history, and specifies a website set as a homepage, for example, as the point serving as the nucleus of the behavior of the user in this category. After the category specification unit 123 specifies the nucleus point of each category in this manner, the point specification unit 120B records information relating to the points within the respective specified categories in the database 200. The point specification unit 120B also records information relating to the points specified by the category specification unit 123 in the database 200 within the respective categories. The point specification unit 120B then likewise outputs the information relating to the points specified by the category specification unit 123 to the behavior learning unit 140.

Furthermore, information indicating a manner in which the input unit 110 is operated by the user is input into the behavior learning unit 140 according to this embodiment in addition to information indicating the position of the information terminal, i.e. a detection result of the GPS 130. The behavior learning unit 140 then learns the behavior of the user on the basis of the input information. Moreover, the behavior learning unit 140 according to this embodiment classifies the behaviors of the user according to the category of the point, among the points specified by the point specification unit 120B, from which each behavior emanates. As a result, the behavior histories reflecting the various behaviors of the user are classified as either movement histories or viewing histories, for example. The behavior learning unit 140 learns the behaviors of the user classified according to category, and records the learning results in the database 200 within the respective categories.

Hence, according to this embodiment, the information relating to the point serving as the nucleus of the behavior of the user and the behavior histories of the user are stored in the database 200 according to category.

Next, a degree of relatedness between the point serving as the nucleus of the behavior of the user and a viewing history in a case where the category of the behavior history of the user is an internetwork viewing history will be described with reference to FIG. 11.

As shown in FIG. 11, it is assumed that a homepage 10 is set as a website that is started up when a web browser of the information terminal owned by the user is activated. Further, links 1 to 3 corresponding to websites 11 to 13 viewed previously by the user, for example, are displayed on the homepage 10, and the homepage 10 is provided with a search function.

During use of the internetwork by the user, the websites 11 to 13 are viewed via the links 1 to 3 using the homepage 10 as a behavior nucleus. Further, when information indicating a predetermined term is input via the input unit 110, information relating to the input term is retrieved via the search function of the homepage 10. Furthermore, viewing histories and search histories are stored appropriately in the database 200.

Here, for example, when the website 11 corresponding to the link 1 has the highest number of views or the longest overall viewing time, the degree of relatedness between the website 11 and the homepage 10 is high. Conversely, when the website 13 corresponding to the link 3 has the lowest number of views or the shortest overall viewing time, the degree of relatedness between the website 13 and the homepage 10 is low.

Hence, in this embodiment, to maintain and manage the capacity of the database 200 storing the viewing histories and search histories, the viewing history of the website 13 having a low degree of relatedness to the homepage 10 is deleted from the database 200 preferentially. Then, when a new website is viewed by the user, the viewing history of this website is stored in the database 200 and a link corresponding to the website is added to the homepage 10 in place of the link 3, for example.

With the behavior history management system and behavior history management method according to this embodiment, as described above, following effects are obtained in addition to the aforesaid effects (1) to (7).

(9) The point serving as the nucleus of the behavior of the user is specified for each of a plurality of categories on the basis of the behavior histories of the user, and the behavior histories of the user are stored in the database 200 according to category. Hence, even when the point serving as the nucleus of the behavior of the user is different in each category, for example the geographical base of the user and the homepage 10, the behavior histories emanating from the different points can be managed accurately, and therefore various behavior histories having a high utility value can be held in the database 200 with stability. As a result, accurate services corresponding to the behavior of the user, such as presentation of locations serving as candidate destinations during user movement and presentation of candidate links during web browser use, can be provided using the various types of behavior histories stored in the database 200 according to category.

(10) The degree of relatedness between the homepage 10 serving as the point specified as the nucleus of the behavior of the user and the websites 11 to 13 is determined on the basis of the number of views and the viewing time of each website 11 to 13. Therefore, a viewing history relating to a site having an old viewing date but a high use frequency and a long viewing time can be held in the database 200 on a long-term basis. As a result, viewing histories having a high utility value to the user can be held in the database 200 with stability.

(Other Embodiments)

Note that the embodiments described above may be implemented as follows.

In the above embodiments, behavior history deletion is executed when the amount of behavior history data stored in the database 200 reaches the holdable upper limit value of the database 200. The invention is not limited thereto, however, and a smaller threshold than the holdable upper limit value of the database 200 may be set such that behavior history deletion is executed when the amount of behavior history data exceeds the threshold. Behavior history deletion may also be executed periodically at predetermined time intervals, for example. Likewise in these cases, by deleting behavior histories having a low utility value to the user preferentially, the amount of accumulated behavior history data in the database 200 can be managed while holding behavior histories having a high utility value to the user in the database 200 with stability.

In the first embodiment, the coefficients "$\alpha$" and "$\beta$" are both set at "1". Further, in the third embodiment, the coefficient "$\alpha$" and the coefficient "$\beta$" are set at "1" and "2", respectively. The invention is not limited thereto, however, and the respective coefficients "$\alpha$" and "$\beta$" may be set at desired values in accordance with the importance of the movement history acquisition date, the distance between the geographical base of the user and the destination, and the number of stays of the vehicle C (the user) at the destination. Further, for example, in the first embodiment the coefficient "$\alpha$" may be set at "0", and in the third embodiment the coefficient "$\alpha$" may be set at "0". In this case, the degree of relatedness between the geographical base of the user and the movement history is determined only on the basis of the distance between the geographical base of the user and the destination and the number of stays of the vehicle C (the user) at the destination. Moreover, as long as the degree of relatedness between the geographical base of the user and the movement history can be determined, the coefficients "$\alpha$" and "$\beta$" need not be multiplied by the distance between the geographical base of the user and the destination and the number of stays of the vehicle C (the user) at the destination.

In the first embodiment, the deletion appropriateness is determined using Equation (A), in which the movement history acquisition timing is added to the distance from the geographical base to the destination. Further, in the third embodiment, the deletion appropriateness is determined using Equation (B), in which the number of stays of the vehicle C at the destination is subtracted from the movement history acquisition timing. The invention is not limited thereto, however, and in the first embodiment, the deletion appropriateness of the movement history may be determined by multiplying the movement history acquisition timing by the distance from the geographical base to the destination. Further, in the third embodiment, the deletion appropriateness of the movement history may be determined by dividing the movement history acquisition timing by the number of stays of the vehicle C at the destination.

In the above embodiments, to delete a behavior history of the user from the database 200, the deletion appropriateness is determined, and a behavior history having a large determined deletion appropriateness is deleted from the database 200 preferentially. The invention is not limited thereto, however, and as long as behavior histories are deleted from the database 200 on the basis of the degree of relatedness between the behavior history and the point serving as the nucleus of the behavior of the user, a movement history in which the distance from the geographical base to the destination exceeds a predetermined threshold or a movement history relating to a destination having a number of stays at or below a predetermined threshold, for example, may be deleted from the database 200 preferentially.

In the first and second embodiments, a movement history obtained on a journey to a destination that is far from the geographical base of the user is specified as a history having a low degree of relatedness to the geographical base of the user. The invention is not limited thereto, however, and with respect to a user having a strong tendency to use destinations far from the geographical base of the user, for example, this movement tendency may be taken into consideration such that a movement history obtained on a journey to a destination close to the geographical base of the user is specified as a history having a low degree of relatedness to the geographical base of the user.

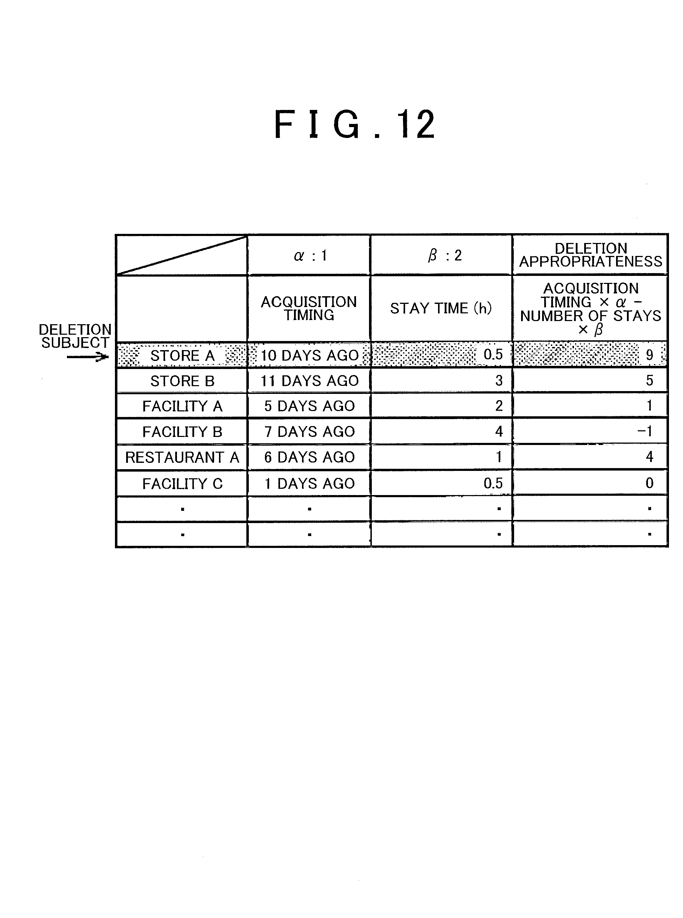

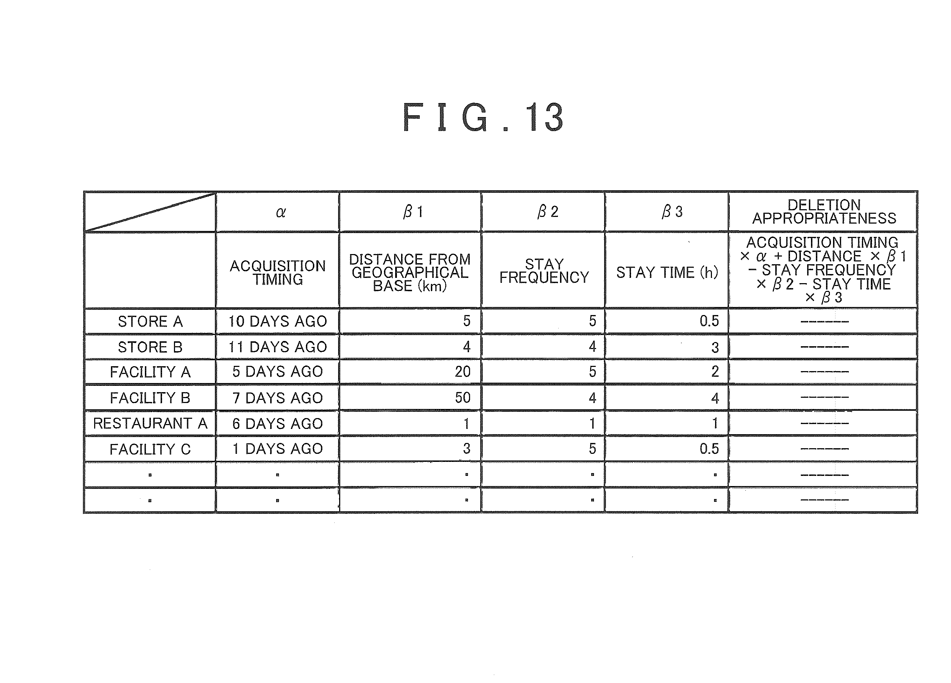

In the first and second embodiments, the degree of relatedness between the geographical base of the user and the movement history is determined on the basis of the distance between the geographical base of the user and the destination. Further, in the third embodiment, the degree of relatedness between the geographical base of the user and the movement history is determined on the basis of the stay frequency (the number of stays) of the vehicle C at the destination. The invention is not limited thereto, however, and as shown in FIG. 12 corresponding to FIGS. 5B and 9, for example, the degree of relatedness between the geographical base of the user and the movement history may be determined on the basis of a stay time of the vehicle C at the destination. In this case, for example, a movement history in which the stay time of the vehicle C at the destination is short is deleted from the database 200 preferentially as a history having a low degree of relatedness to the geographical base of the user. Further, as shown in FIG. 13 corresponding to FIGS. 5B and 9, the degree of relatedness between the geographical base of the user and the movement history may be determined on the basis of the distance from the geographical base of the user to the destination, the stay frequency, and the stay time. Then, when calculating the deletion appropriateness, coefficients $\beta 1$ to $\beta 3$ are multiplied by the distance from the geographical base of the user to the destination, the stay frequency, and the stay time, respectively. Moreover, the element used to determine the degree of relatedness between the geographical base of the user and the behavior history may be any element that reflects behavior patterns of the user emanating from the geographical base of the user.

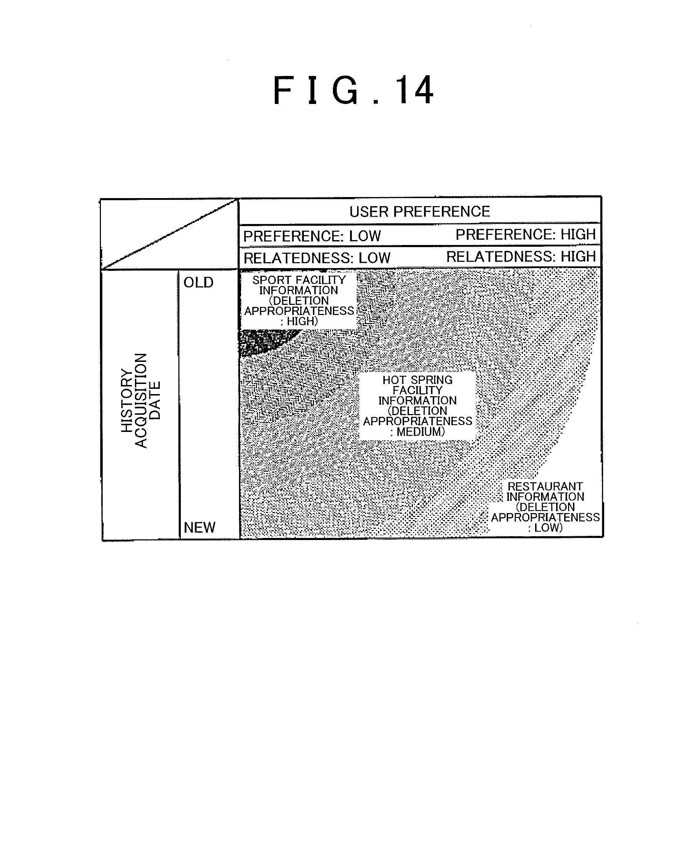

In the first to third embodiments, the degree of relatedness between the geographical base of the user and the movement history is determined on the basis of the distance from the geographical base of the user to the destination, the stay frequency, the stay time, and so on. Further, in the fourth embodiment, the degree of relatedness between the homepage 10 serving as the point specified as the nucleus of the behavior of the user and the websites 11 to 13 is determined on the basis of the number of views and the viewing time of each website 11 to 13. Alternatively, as shown in FIG. 14, user preferences may be analyzed from the movement histories and website viewing histories of the user such that the deletion subject history is specified on the basis of the analyzed preferences. In this case, it is learned from the movement histories and website search histories of a user who uses restaurants frequently but uses sport facilities infrequently, for example, that the user has a high preference for restaurants. Accordingly, movement histories and viewing histories relating to restaurants are stored in the database preferentially. Since the sport facility use frequency is low, on the other hand, it is learned that the user has a low preference for sport facilities. Accordingly, movement histories and viewing histories relating to sport facilities are deleted from the database preferentially. Thus, a movement history or a viewing history relating even to a restaurant that has been used only once in the past by the user, for example, is determined to have a high utility value to the user and therefore held in the database with stability. Furthermore, by holding histories reflecting the preferences of the user in the database, history management is performed in alignment with the preferences of the user.

In the first to third embodiments, the home of the user is specified as the geographical base of the user. The invention is not limited thereto, however, and in a case where the vehicle C belongs to a corporate body such as a company, for example, a parking lot of the corporate body or the like may be specified as the geographical base of the user. Further, in the fourth embodiment, the homepage 10 is set as the point serving as the nucleus of the behavior of the user, but the invention is not limited thereto, and instead, the website having the highest use frequency or the website having the longest use time, for example, may be specified as the point serving as the nucleus of the behavior of the user. Moreover, as long as the point serving as the nucleus of the behavior of the user constitutes a base from which user behavior emanates, the point may be modified appropriately.

In the first to third embodiments, the recording system constituted by the database 200 and the management system constituted by the deletion necessity determination unit 310, the deletion subject data determination unit 320, and the data deletion unit 330 are installed in the vehicle C. Further, in the fourth embodiment, the recording system and management system are installed in an information terminal owned by the user. The invention is not limited thereto, however, and instead, for example, the recording system and management system may be provided in a center for managing the behavior histories of the user, and the behavior histories of the user may be collected in the center. Various services may then be provided to the user on the basis of the behavior histories managed in the center. In this case, even when a large number of behavior histories of a plurality of users are collected in a database provided in the center, the capacity of the database can be maintained at or below a predetermined value by preferentially deleting behavior histories having a low degree of relatedness to the points serving as the nuclei of the behavior of the users.

In the first to third embodiments, the behavior history management system is installed in the vehicle C, but the behavior history management system may be installed in an information terminal owned by the user.

| 10 | homepage serving as behavior base of user |
| 11-13 | website |
| 110 | input unit |
| 120 | point specification unit |
| 120A | point specification unit |
| 120 | Bpoint specification unit |
| 121 | departure/arrival point recording unit |
| 122 | base estimation unit |
| 123 | category specification unit |
| 130 | GPS |
| 140 | behavior learning unit |
| 140A | behavior learning unit |
| 141 | stay frequency calculation unit |
| 200 | database |
| 310 | deletion necessity determination unit |
| 320 | deletion subject data determination unit |
| 330 | data deletion unit |
| 400 | navigation system |
| 410 | display device |
| C | vehicle |

Claims

1. A behavior history management system that stores behavior histories of a user in a database and manages the behavior histories,
the system **characterized by** comprising:

a point specification unit that specifies a point serving as a nucleus of behavior of the user; and
a data management unit that specifies a behavior history having a low degree of relatedness to the point specified by the point specification unit, and when data are to be deleted from the database, deletes the specified behavior history preferentially.

2. The behavior history management system according to claim 1, wherein
the point serving as the nucleus of the behavior of the user is specified in relation to at least one category based on the behavior histories of the user, and the point specification unit specifies the point serving as the nucleus of the behavior of the user for each category, and
the database stores the behavior histories for each category.

3. The behavior history management system according to claim 1 or 2, wherein
the behavior histories are histories representing behaviors of the user, which are generated every time the user travels to a destination, and
the data management unit specifies a behavior history generated on a journey to a destination having a low degree of relatedness to the specified point as a behavior history to be deleted from the database.

4. The behavior history management system according to claim 3, wherein
the point serving as the nucleus of the behavior of the user is a geographical base of the user, and
the data management unit determines the degree of relatedness between the specified point and the behavior history on the basis of a distance from the geographical base of the user to the destination.

5. The behavior history management system according to claim 4, wherein the data management unit specifies a behavior history generated on a journey to a destination located a relatively great distance from the geographical base of the user as the behavior history having the low degree of relatedness to the specified point.

6. The behavior history management system according to any one of claims 1 to 5, wherein the data management unit manages acquisition dates of the behavior histories of the user, and specifies the behavior history to be deleted preferentially from the database in consideration of the acquisition dates of the behavior histories.

7. The behavior history management system according to claim 6, wherein the data management unit multiplies an element indicating the degree of relatedness between the specified point and the behavior history and the acquisition date of the behavior history by respective coefficients, and specifies the behavior history to be deleted preferentially from the database on the basis of two multiplication values obtained by the multiplication.

8. The behavior history management system according to any one of claims 1 to 7, wherein the data management unit determines the degree of relatedness between the specified point and the behavior history on the basis of at least one of a generation frequency of behavior histories representing identical or similar behaviors, from among the behavior histories emanating from the specified point, and a stay time of the user at a target point arrived at from the specified point.

9. The behavior history management system according to any one of claims 1 to 8, wherein the behavior history is a movement history of a vehicle operated by the user.

10. The behavior history management system according to any one of claims 1 to 9, wherein the point specification unit learns information relating to departure and arrival points including departure points from which the user departs and arrival points at which the user arrives after departing from the departure points, and estimates that a departure point having a relatively wide distribution of arrival points emanating therefrom, from among the learned departure and arrival points, is the point serving as the nucleus of the behavior of the user.

11. A behavior history management method for storing behavior histories of a user in a database and managing the behavior histories,
the method **characterized by** comprising:

a step of specifying a point serving as a nucleus of behavior of the user; and
a step of specifying a behavior history having a low degree of relatedness to the specified point, and when data are to be deleted from the database, deleting the specified behavior history preferentially.

12. The behavior history management method according to claim 11, **characterized in that**, in the point specifying step, the point serving as the nucleus of the behavior of the user is specified in relation to at least one category based on the behavior histories of the user, and the behavior histories are stored in the database for each specified category.

**13.** The behavior history management method according to claim 11 or 12, **characterized in that**
the behavior histories are histories representing behaviors of the user, which are generated every time the user travels to a destination, and
in the deleting step, a behavior history generated on a journey to a destination having a low degree of relatedness to the specified point is specified as a behavior history to be deleted from the database.

**14.** The behavior history management method according to claim 13, **characterized in that**
in the point specifying step, a geographical base of the user is specified as the point serving as the nucleus of the behavior of the user, and
in the behavior history specifying step, the degree of relatedness between the specified point and the behavior history is determined on the basis of a distance from the geographical base of the user to the destination.

**15.** The behavior history management method according to any one of claims 11 to 14, further comprising a step of attaching an acquisition date to the behavior history of the user when the behavior history is obtained, the method **characterized in that**
in the behavior history specifying step, the behavior history to be deleted preferentially from the database is specified in consideration of the acquisition dates attached to the behavior histories.

# F I G . 1

VEHICLE C

BASE ADDRESS INPUT
110

INPUT UNIT  VEHICLE

POINT SPECIFICATION UNIT  120

BASE INFORMATION

BEHAVIOR LEARNING UNIT  140

POSITION INFORMATION

GPS  130

INPUT SYSTEM

DATABASE  200

RECORDING SYSTEM

DELETION NECESSITY DETERMINATION UNIT  310

DELETION SUBJECT DATA DETERMINATION UNIT  320

DATA DELETION UNIT  330

MANAGEMENT SYSTEM (DATA MANAGEMENT UNIT)

NAVIGATION SYSTEM  400

DISPLAY DEVICE  410

# F I G . 2A

| | | DISTANCE FROM BASE | | |
|---|---|---|---|---|
| | | FAR | NEAR | |
| | | RELATEDNESS: LOW | | RELATEDNESS: HIGH |
| MOVEMENT HISTORY ACQUISITION DATE | OLD | MOVEMENT HISTORY 1 | MOVEMENT HISTORY 6 | MOVEMENT HISTORY 11 |
| | | MOVEMENT HISTORY 2 | MOVEMENT HISTORY 7 | MOVEMENT HISTORY 12 |
| | | MOVEMENT HISTORY 3 | MOVEMENT HISTORY 8 | MOVEMENT HISTORY 13 |
| | | MOVEMENT HISTORY 4 | MOVEMENT HISTORY 9 | MOVEMENT HISTORY 14 |
| | NEW | MOVEMENT HISTORY 5 | MOVEMENT HISTORY 10 | MOVEMENT HISTORY 15 |

# F I G . 2B

| | | DISTANCE FROM BASE | | |
|---|---|---|---|---|
| | | FAR | NEAR | |
| | | RELATEDNESS: LOW | | RELATEDNESS: HIGH |
| MOVEMENT HISTORY ACQUISITION DATE | OLD | DELETION APPROPRIATENESS : HIGH | | |
| | NEW | | | DELETION APPROPRIATENESS :LOW |

EP 2 752 793 A1

# FIG.3

START

OBTAIN MOVEMENT HISTORY — S100

AMOUNT OF STORED MOVEMENT HISTORY DATA ≤ UPPER LIMIT VALUE? — S101

NO

YES

CALCULATE DELETION APPROPRIATENESS — S102

SPECIFY MOVEMENT HISTORY HAVING HIGHEST DELETION APPROPRIATENESS — S103

EXTRACT MOVEMENT HISTORY HAVING HIGHEST DELETION APPROPRIATENESS — S104

DELETE EXTRACTED MOVEMENT HISTORY — S105

STORE OBTAINED MOVEMENT HISTORY — S106

END

21

FIG.4A

200
UPPER
LIMIT VALUE

MOVEMENT HISTORIES

FIG.4B

200
UPPER
LIMIT VALUE

RELATEDNESS: HIGH

RELATEDNESS: MEDIUM

RELATEDNESS: LOW

FIG.4C

200
UPPER
LIMIT VALUE

RELATEDNESS: HIGH

RELATEDNESS: MEDIUM

RELATEDNESS: LOW

FIG.4D

200

RELATEDNESS: HIGH

RELATEDNESS: MEDIUM

FIG.4E

200

RELATEDNESS: HIGH

RELATEDNESS: MEDIUM

NEW MOVEMENT
HISTORY

NEW REGISTRATION

# F I G . 5A

| | $\alpha$ : 1 | $\beta$ : 1 |
|---|---|---|
| | ACQUISITION TIMING | DISTANCE FROM GEOGRAPHICAL BASE (km) |
| STORE A | 10 DAYS AGO | 5 |
| STORE B → *(DELETION SUBJECT)* | 11 DAYS AGO | 4 |
| FACILITY A | 5 DAYS AGO | 20 |
| FACILITY B | 7 DAYS AGO | 50 |
| RESTAURANT A | 6 DAYS AGO | 1 |
| FACILITY C | 1 DAYS AGO | 3 |
| . | . | . |
| . | . | . |

DELETION SUBJECT → (STORE B)

# F I G . 5B

| | $\alpha$ : 1 | $\beta$ : 1 | DELETION APPROPRIATENESS |
|---|---|---|---|
| | ACQUISITION TIMING | DISTANCE FROM GEOGRAPHICAL BASE (km) | ACQUISITION TIMING $\times \alpha$ + DISTANCE $\times \beta$ |
| STORE A | 10 DAYS AGO | 5 | 15 |
| STORE B | 11 DAYS AGO | 4 | 15 |
| FACILITY A | 5 DAYS AGO | 20 | 25 |
| FACILITY B | 7 DAYS AGO | 50 | 57 |
| RESTAURANT A | 6 DAYS AGO | 1 | 7 |
| FACILITY C | 1 DAYS AGO | 3 | 4 |
| . | . | . | . |
| . | . | . | . |

DELETION SUBJECT → (FACILITY B)

# F I G . 6

EP 2 752 793 A1

FIG.7A

FIG.7C

FIG.7B

EP 2 752 793 A1

# FIG.8

EP 2 752 793 A1

**VEHICLE C**

**BASE ADDRESS INPUT**

INPUT UNIT ~110   VEHICLE   120

POINT SPECIFICATION UNIT

BASE INFORMATION   ~140A

BEHAVIOR LEARNING UNIT   ~141

STAY FREQUENCY CALCULATION UNIT

POSITION INFORMATION   POSITION INFORMATION

GPS

INPUT SYSTEM   ~130

DATABASE   200

RECORDING SYSTEM

DELETION NECESSITY DETERMINATION UNIT   ~310

DELETION SUBJECT DATA DETERMINATION UNIT   ~320

DATA DELETION UNIT   ~330

MANAGEMENT SYSTEM (DATA MANAGEMENT UNIT)

NAVIGATION SYSTEM   ~400

DISPLAY DEVICE   ~410

# FIG.9

| | | $\alpha : 1$ | $\beta : 2$ | DELETION APPROPRIATENESS |
|---|---|---|---|---|
| | | ACQUISITION TIMING | NUMBER OF STAYS | ACQUISITION TIMING $\times \alpha$ − NUMBER OF STAYS $\times \beta$ |
| | STORE A | 10 DAYS AGO | 5 | 0 |
| | STORE B | 11 DAYS AGO | 4 | 3 |
| | FACILITY A | 5 DAYS AGO | 5 | 0 |
| DELETION SUBJECT → | FACILITY B | 7 DAYS AGO | 4 | −1 |
| | RESTAURANT A | 6 DAYS AGO | 1 | 4 |
| | FACILITY C | 1 DAYS AGO | 5 | −9 |
| | . | . | . | . |
| | . | . | . | . |

# FIG.10

SEARCH TERM INPUT
~110
INPUT UNIT | VEHICLE | 120B
POINT SPECIFICATION UNIT
CATEGORY SPECIFICATION UNIT
123
BASE INFORMATION/ CATEGORY INFORMATION
~140
BEHAVIOR LEARNING UNIT
POSITION INFORMATION
GPS
INPUT SYSTEM ~130

200
DATABASE
RECORDING SYSTEM

~310
DELETION NECESSITY DETERMINATION UNIT
~320
DELETION SUBJECT DATA DETERMINATION UNIT
DATA DELETION UNIT
330
MANAGEMENT SYSTEM (DATA MANAGEMENT UNIT)

EP 2 752 793 A1

# FIG.11

HOMEPAGE

• LINK 1
• LINK 2
• LINK 3
•
•

LONG TIME/HIGH
FREQUENCY →
RELATEDNESS:
HIGH

MEDIUM TIME/
MEDIUM
FREQUENCY →
RELATEDNESS:
MEDIUM

SHORT TIME/
LOW FREQUENCY
→ RELATEDNESS:
LOW

EP 2 752 793 A1

# F I G . 12

| | α : 1 | β : 2 | DELETION APPROPRIATENESS |
|---|---|---|---|
| | ACQUISITION TIMING | STAY TIME (h) | ACQUISITION TIMING × α − NUMBER OF STAYS × β |
| STORE A | 10 DAYS AGO | 0.5 | 9 |
| STORE B | 11 DAYS AGO | 3 | 5 |
| FACILITY A | 5 DAYS AGO | 2 | 1 |
| FACILITY B | 7 DAYS AGO | 4 | −1 |
| RESTAURANT A | 6 DAYS AGO | 1 | 4 |
| FACILITY C | 1 DAYS AGO | 0.5 | 0 |
| . | . | . | . |
| . | . | . | . |

DELETION SUBJECT →

# F I G . 1 3

| | $\alpha$ | $\beta 1$ | $\beta 2$ | $\beta 3$ | DELETION APPROPRIATENESS |
|---|---|---|---|---|---|
| | ACQUISITION TIMING | DISTANCE FROM GEOGRAPHICAL BASE (km) | STAY FREQUENCY | STAY TIME (h) | ACQUISITION TIMING $\times \alpha$ + DISTANCE $\times \beta 1$ − STAY FREQUENCY $\times \beta 2$ − STAY TIME $\times \beta 3$ |
| STORE A | 10 DAYS AGO | 5 | 5 | 0.5 | ──────── |
| STORE B | 11 DAYS AGO | 4 | 4 | 3 | ─────── |
| FACILITY A | 5 DAYS AGO | 20 | 5 | 2 | ─────── |
| FACILITY B | 7 DAYS AGO | 50 | 4 | 4 | ─────── |
| RESTAURANT A | 6 DAYS AGO | 1 | 1 | 1 | ─────── |
| FACILITY C | 1 DAYS AGO | 3 | 5 | 0.5 | ─────── |
| ・ | ・ | ・ | ・ | ・ | ─────── |
| ・ | ・ | ・ | ・ | ・ | ─────── |

EP 2 752 793 A1

# F I G . 14

| | | USER PREFERENCE | |
|---|---|---|---|
| | | PREFERENCE: LOW | PREFERENCE: HIGH |
| | | RELATEDNESS: LOW | RELATEDNESS: HIGH |
| HISTORY ACQUISITION DATE | OLD | SPORT FACILITY INFORMATION (DELETION APPROPRIATENESS : HIGH) | |
| | | HOT SPRING FACILITY INFORMATION (DELETION APPROPRIATENESS : MEDIUM) | |
| | NEW | | RESTAURANT INFORMATION (DELETION APPROPRIATENESS : LOW) |

## INTERNATIONAL SEARCH REPORT

| | International application No. |
|---|---|
| | PCT/JP2011/069534 |

### A. CLASSIFICATION OF SUBJECT MATTER
*G06Q10/00* (2012.01) i

According to International Patent Classification (IPC) or to both national classification and IPC

### B. FIELDS SEARCHED

Minimum documentation searched (classification system followed by classification symbols)
G06Q50/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 11-083531 A (Nippon Telegraph and Telephone Corp.),<br>26 March 1999 (26.03.1999),<br>entire text; all drawings<br>(Family: none) | 1-9,11-15<br>10 |
| A | JP 2011-028436 A (Nippon Telegraph and Telephone Corp.),<br>10 February 2011 (10.02.2011),<br>entire text; all drawings<br>(Family: none) | 1,11 |
| A | JP 2004-524712 A (ISMAIL Labeeb K.),<br>12 August 2004 (12.08.2004),<br>paragraphs [0077] to [0078]; fig. 17 to 18<br>& WO 2001/017250 A1 & EP 1230798 A<br>& US 2006/0212900 A1 | 1,11 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 November, 2011 (28.11.11) | 06 December, 2011 (06.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011028436 A